# EUROPÄISCHE PATENTSCHRIFT

(11) **EP 1 896 223 B1**
(45) Veröffentlichungstag und Bekanntmachung des Hinweises auf die Patenterteilung: **12.11.2008**
(21) Anmeldenummer: 06722838.7
(22) Anmeldetag: 06.05.2006
(51) Int. Cl.: B25G 1/01, B25D 1/12

(54) **RÜCKSCHLAGFREIER HAMMER**
RECOILLESS HAMMER
MASSETTE PLASTIQUE

(30) Priorität: 27.06.2005 DE 202005010158 U
(43) Veröffentlichungstag der Anmeldung: 12.03.2008
(73) Patentinhaber: Erwin Halder KG, 88480 Achstetten-Bronnen (DE)
(72) Erfinder: HALDER, Stefan, 88480 Achstetten-Bronnen (DE); HUMMEL, Dieter, 88339 Bad Waldsee (DE)
(74) Vertreter: Hentrich, Swen
(86) Internationale Anmeldenummer: PCT/DE2006/000780
(87) Internationale Veröffentlichungsnummer: WO 2007/000124

(56) Entgegenhaltungen:
- EP-A- 0 088 268
- EP-A- 0 615 819
- GB-A- 1 199 739
- US-A- 2 067 751
- US-A- 2 656 225
- US-A- 3 018 140
- US-A- 3 128 131
- US-A- 3 877 826
- US-A- 4 118 258

## Beschreibung

Die Erfindung betrifft einen rückschlagfreien Hammer gemäß dem Oberbegriff des Anspruch 1 mit einem eine Stielaufnahme aufweisenden Hammerkopf und mit einem in die Stielaufnahme einzusetzenden Hammerstiel, wobei die Stielaufnahme in Umfangsrichtung allseitig durch ein elastisch nachgiebiges Material ausgekleidet ist. Ein solcher Hammer ist aus der US-A-6 739 218 bekannt.

Derartige rückschlagfreie Hämmer sind bei professionellen Handwerkern weit verbreitet, da mit diesen die Möglichkeit besteht, Schläge auf ein Werkstück auszuüben, ohne dass ein starker Rückschlag auftritt. Diese sehr starke Kompensation oder sogar vollständige Eliminierung des Rückschlages wird beispielsweise erreicht, indem der Hammerkopf als Hohlgebilde gestaltet ist, in dem Schrot mit einer hohen Masse angeordnet ist, beispielsweise kleine Metallkugeln, die aufgrund ihrer Trägheit zeitversetzt gegenüber dem Zeitpunkt des Auftreffens der äußeren Schlagfläche des Hammerkopfes auf das Werkstück auf die in Schlagrichtung vordere Innenseite des Hammerkopfes treffen und dadurch einen gegenüber dem Rückschlag entgegengerichteten Impuls auf den Hammerkopf übertragen, der eben der Kompensierung des Rückschlages dient. Derartige rückschlagfreie Hämmer haben sich in der Praxis bewährt, jedoch ist in der technischen Entwicklung das Bemühen festzustellen, rückschlagfreie Hämmer mit massiven Hammerköpfen bereitzustellen, wozu in der US 6 739 218 B2 vorgeschlagen ist, den Hammerkopf mit dem Hammerstiel über ein Gelenk zu verbinden, wobei zwischen dem Hammerstiel und dem Hammerkopf eine Feder angeordnet ist, die einer Verdrehung des Hammerkopfes um das Gelenk gegenüber dem Hammerstiel entgegenwirkt. Nachteilig bei einem derartigen rückschlagfreien Hammer ist die labile Verbindung zwischen dem Hammerkopf und dem Hammerstiel, die bei dem Handwerker Verunsicherung hervorruft, ob der Hammerkopf auch dauerhaftend belastbar mit dem Hammerstiel verbunden ist oder eine Gefährdung gegeben sein könnte.

Der Erfindung liegt die Aufgabe zugrunde, einen rückschlagfreien Hammer der eingangs genannten Art so auszubilden, dass unter Verzicht auf ein Drehgelenk bei einem rückschlagfreien Hammer mit einem massiven, nicht hohlen Hammerkopf eine rückschlagkompensierende Wirkung erreicht ist.

Diese Aufgabe wird gemäß Anspruch 1 bei einem rückschlagfreien Hammer der eingangs genannten Art dadurch gelöst, dass auf dem der Stielaufnahme zugewandten Ende des Hammerstiels eine Metallhülse angeordnet ist mit einem massiven in der Stielaufnahme in dem elastisch nachgiebigen Material platzierten Hülsenkopf, dass die Stielaufnahme auf zwei gegenüberliegenden Seiten Sicherungsstege aufweist, und dass der Hülsenkopf einen Hülsenbund und eine am freien Ende ausgebildete Abschrägung aufweist. Vorteilhafte Ausführungen der erfindungsgemäßen Vorrichtung sind in den Unteransprüchen beschrieben.

Ein derartiger rückschlagfreier Hammer hat zunächst den Vorteil, dass dieser die dem Fachmann vertraute äußerliche Gestalt eines Schlosserhammers aufweist, bei dem der Hammerstiel in die Stielaufnahme des Hammerkopfes eingesetzt ist, ohne dass für die Verbindung zwischen dem Hammerkopf und dem Hammerstiel ein Gelenk erforderlich ist. Da die Stielaufnahme in Umfangrichtung allseitig mit dem elastisch nachgiebigen Material ausgekleidet ist, hat der Hammerkopf die Möglichkeit, unter Ausnutzung der elastischen Nachgiebigkeit, sich geringfügig gegenüber dem Hammerstiel zu verstellen, wobei die Verstellung nicht in einer, beispielsweise durch eine Gelenkachse vorgegebenen, Richtung erfolgen muss und daher eine Kompensation des Rückschlages auch auftritt, wenn der Hammerkopf mit leichter Neigung auf das Werkstück auftritt.

Die Metallhülse ermöglicht dabei eine Erhöhung der Auszugsfestigkeit des Hammerstiels aus der Stielaufnahme, da bei dieser Gestaltung ein Formschluss zwischen der Metallhülse und dem Hammerkopf gegeben ist, der eine Bewegung des Hülsenkopfes aus der Stielaufnahme blockiert, wobei die Abschrägung des Hülsenkopfes dazu dient, durch geeignete Schrägstellung des Hammerstiels den Hülsenkopf der Metallhülse in die Stielaufnahme einführen zu können.

Zweckmäßig ist es dabei, wenn das elastisch nachgiebige Material als Hülse gestaltet ist, also in Umfangsrichtung einen inneren Zusammenhalt aufweist.

Besonders bevorzugt ist eine Ausführungsform der Erfindung, die dadurch gekennzeichnet ist, dass die Hülse aus Naturkautschuk gebildet ist, da dieser sich besonders durch die leichte Verarbeitbarkeit auszeichnet, die geforderten mechanischen Eigenschaften aufweist und darüber hinaus nur gering für Alterungsprozesse anfällig ist. Diese Vorteile werden noch stärker ausgeprägt, wenn die Hülse aus Neopren gebildet ist, also einem Mikroporen aufweisenden Kautschuk. Alternativ besteht auch die Möglichkeit, dass die Hülse aus Butyl gebildet ist.

Von Vorteil ist es weiterhin, wenn die Stielaufnahme als Durchgangsöffnung gestaltet ist, da so die Möglichkeit besteht, den Hammerstiel durch die Stielaufnahme hindurchzuführen und dem Handwerker wie bei Schlosserhämmern in vertrauter Weise eine optische Kontrolle des festen Sitzes des Hammerstiels in der Stielaufnahme zu ermöglichen.

Der festen Verbindung der Metallhülse mit dem Hammerstiel dient auch, dass die Innenwandung der Metallhülse konisch geformt ist mit von der Hülsenöffnung zum Hülsengrund nach innen gerichteter Neigung.

Ein besserer Schutz der Metallhülse gegen Beschädigung ist gegeben, wenn die Hülse die Metallhülse über deren gesamte axiale Erstreckung umschließt, also das elastisch nachgiebige Material die Metallhülse vollständig kapselt, so dass ein Schutz des Hammerstiels und des Werkstücks bei ungenauen Hammerschlägen gegeben ist.

Erneut einer Sicherung der Verbindung zwischen dem Hammerstiel und dem Hammerkopf dient, dass an dem der Stielaufnahme zugewandten Ende des Hammerstiels eine Keilaufnahme für die Aufnahme eines Keils ausgebildet ist, und dass der Hammerstiel mittels eines die Metallhülse und den Hammerstiel durchsetzenden Stiften in der Metallhülse gesichert ist.

Im Rahmen der Erfindung ist weiterhin vorgesehen, dass die Außenumfangsfläche der Metallhülse reliefartige Strukturen aufweist, um so eine festere Verbindung der Metallhülse mit dem elastisch nachgiebigen Material erzielen zu können.

Eine hinsichtlich von Kostenvorteilen bei der Fertigung bevorzugte Ausführungsform ist dadurch gekennzeichnet, dass die Hülse die in die Stielaufnahme mit dem Hammerstiel eingesetzte Metallhülse als ein Spritzgußteil umschließt.

Um eine möglichst dauerhafte und belastbare Verbindung der Hülse mit den angrenzenden Metallteilen zu erzielen, ist die Gestaltung so getroffen, dass die Hülse und der Hammerkopf mittels eines Gummi-Metallbindemittels ein erstes Gummi-Metall-Verbundelement bilden oder dass die Hülse und die Metallhülse mittels eines Gummi-Metallbindemittels ein zweites Gummi-Metall-Verbundelement bilden. Geeignete Bindemittel sind seit 1960 unter der Marke "Chemosil" verfügbar.

Im folgenden wird die Erfindung an in der Zeichnung dargestellten Ausführungsbeispielen näher erläutert; es zeigen:
- Fig. 1: eine Seitenansicht eines rückschlagfreien Hammers, teilweise im Schnitt dargestellt,
- Fig. 2: eine Rückansicht des rückschlagfreien Hammers aus Figur 1, teilweise im Schnitt dargestellt,
- Fig. 3: eine erfindungsgemäße Ausführungsform des rückschlagfreien Hammers in einer der Figur 1 entsprechenden Darstellungsweise,
- Fig. 4: eine der Figur 2 entsprechende Darstellungsweise des rückschlagfreien Hammers aus Figur 3,

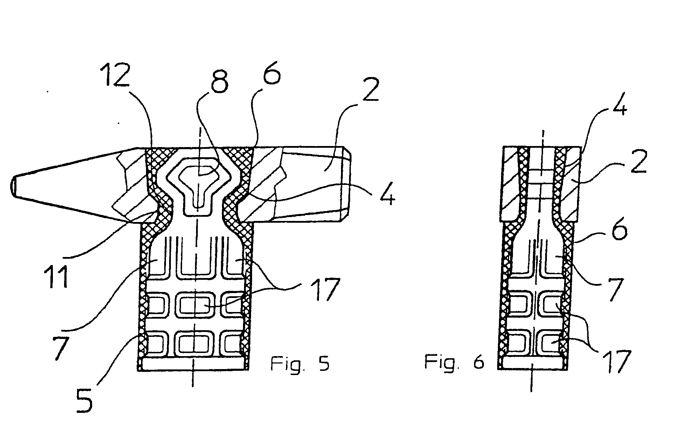

- Fig. 5: eine isolierte Darstellung des Hammerkopfes mit der die Metallhülse als Spritzgußteil umschließenden Hülse, mit einer Darstellung der Oberfläche der Metallhülse, und
- Fig. 6: einen Schnitt durch den Hammerkopf und die Hülse kombiniert mit einer Darstellung der Oberfläche der Metallhülse.

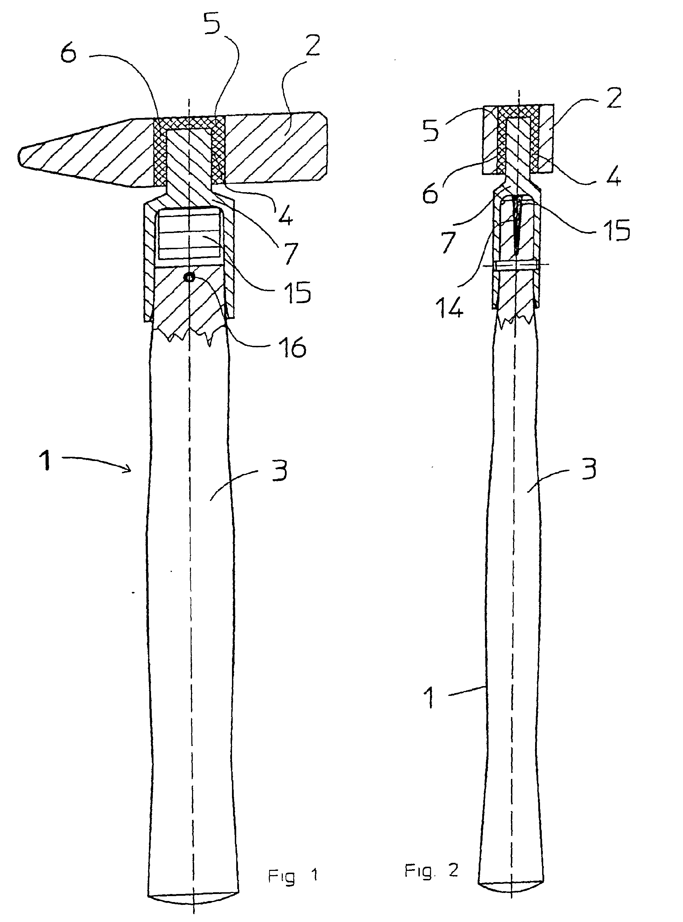

In der Zeichnung ist in Figur 1 ein rückschlagfreier Hammer 1 gezeigt, der aus einem Hammerkopf 2 und einem Hammerstiel 3 besteht. Der Hammerkopf 2 weist eine Stielaufnahme 4 auf, die in Umfangrichtung allseitig durch ein elastisch nachgiebiges Material 5 ausgekleidet ist, also eine aus dem elastisch nachgiebigen Material gebildete Hülse 6 vorliegt, die aus Naturkautschuk, Neopren oder einem anderen elastisch nachgiebigen Material mit den erforderlichen mechanischen Eigenschaften gebildet sein kann.

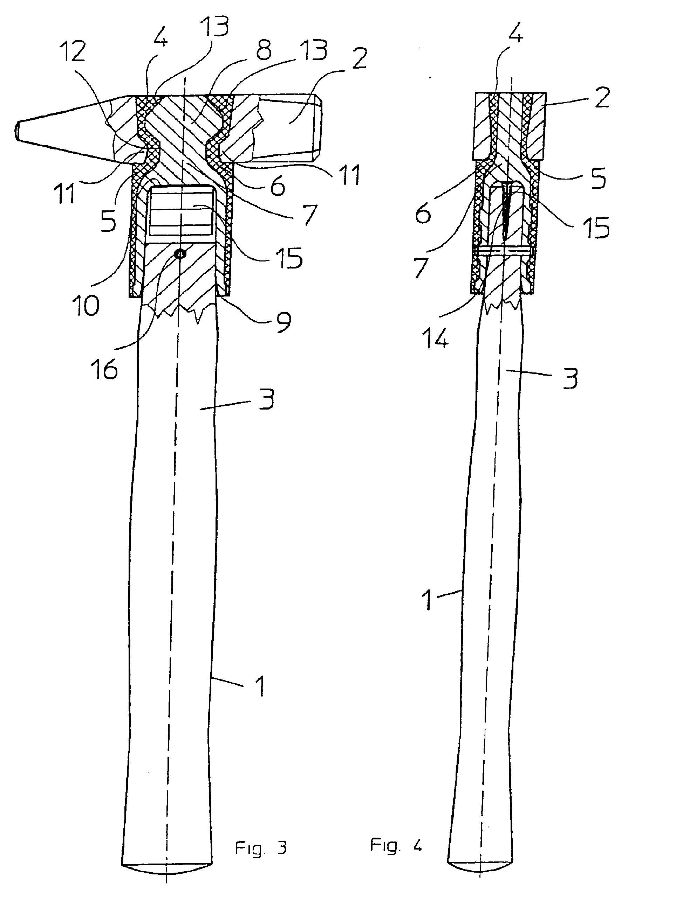

Die Figuren 3 und 4 lassen erkennen, dass die Stielaufnahme 4 als Durchgangsöffnung gestaltet ist, wobei bei allen Ausführungfomen auf der der Stielaufnahme 4 zugewandten Seite des Hammerstiels 3 eine Metallhülse 7 angeordnet ist mit einem massiven in der Stielaufnahme in der Hülse 6 platzierten Hülsenkopf 8. Die Metallhülse 7 ist als ein Gußteil gefertigt.

Die Innenwandung der Metallhülse 7 ist konisch geformt mit von der Hülsenöffnung 9 zum Hülsengrund 10 nach innen gerichteter Neigung von ca. 1°. Wie weiterhin aus der Figur 3 erkennbar ist, weist die Stielaufnahme 4 auf zwei gegenüberliegenden Seiten Sicherungsstege 11 auf, wobei der Hülsenkopf 8 einen Hülsenbund 12 und am freien Ende ausgebildete Abschrägungen 13 besitzt. Zum Erzielen einer höher belastbaren Verbindung zwischen dem Hammerstiel 3 und der Metallhülse 7 ist an dem der Stielaufnahme 4 zugewandten Ende des Hammerstiels 3 eine Keilaufnahme 14 für die Aufnahme eines Keils 15 ausgebildet und der Hammerstiel 3 mittels eines die Metallhülse 7 und den Hammerstiel 3 durchsetzenden Stiftes 16 in der Metallhülse 7 gesichert.

Eine innigere Verbindung zwischen der Metallhülse 7 und der aus dem elastisch nachgiebigen Material 5 gebildeten Hülse 6 wird erreicht, indem die Außenumfangsfläche der Metallhülse 7 reliefartige Strukturen 17 aufweist und dass die Hülse und die Metallhülse 7 mittels eines Gummi-Metallbindemittels ein zweites Gummi-Metall-Verbundelement bilden.

Um den erfindungsgemäßen rückschlagfreien Hammer 1 zu fertigen, wird zunächst der Keil 15 in der Keilaufnahme 14 positioniert und sodann der Hammerstiel 3 in die Metallhülse 7 mit hoher Kraft eingepresst, so dass dabei der Keil 15 in die Keilaufnahme 14 getrieben wird und eine Sicherung des Hammerstiels 3 in der Metallhülse 7 bewirkt, die durch den Stift 16 ergänzt wird. Sodann wird die Metallhülse 7 durch eine geeignete geneigte Orientierung des Hülsenkopfes 8 gegenüber der Durchgangsöffnung in diese eingesetzt, so dass bei entsprechender, aus Figur 3 ersichtlicher rechtwinkliger Orientierung des Hammerkopfes 2 mit dem Hammerstiel 3 das Entfernen des Hülsenkopfes 8 aus der Durchgangsöffnung durch die Sicherungsstege 11 blockiert ist. Nachdem der Hammerstiel 3 mit der Metallhülse 7 die korrekte Position innerhalb der Durchgangsöffnung eingenommen hat, wird die Hülse 6 als ein Spritzgußteil um die Metallhülse 7 geformt, die dabei über ihre gesamte axiale Erstreckung überdeckt wird. Beim Vulkanisieren erfolgt durch das Gummi-Metallbindemittel die Bildung der Verbundelemente.

Der fertige rückschlagfreie Hammer 1 stellt ein Produkt dar, das konventionellen Schlosserhammern ähnelt, sich zusätzlich aber durch eine Kompensation des Rückschlages auszeichnet, wobei dies durch eine kurzfristige Verformung der Hülse 6 erreicht wird, der Hammerkopf 2 sich also gegenüber dem Hülsenkopf 8 der Metallhülse 7 verstellt und nach dem Abklingen der Schlagwirkung wieder in seine Ruhelage zurückkehrt.

## Patentansprüche

1. Rückschlagfreier Hammer mit einem eine Stielaufnahme (4) aufweisenden Hammerkopf (2) und mit einem in die Stielaufnahme (4) einzusetzenden Hammerstiel (3), wobei die Stielaufnahme (4) in Umfangsrichtung allseitig durch ein elastisch nachgiebiges Material (5) ausgekleidet ist, **dadurch gekennzeichnet, dass** auf dem der Stielaufnahme zugewandten Endes des Hammerstiels eine Metallhülse (7) angeordnet ist mit einem massiven in der Stielaufnahme in dem elastisch nachgiebigen Material platzierten Hülsenkopf (8), dass die Stielaufnahme auf zwei gegenüberliegenden Seiten Sicherungsstege (11) aufweist, und daß der Hülsenkopf einen Hülsenbund (12) und eine am freien Ende ausgebildete Abschrägung (13) aufweist.

2. Rückschlagfreier Hammer nach Anspruch 1, **dadurch gekennzeichnet, daß** das elastisch nachgiebige Material (5) als.Hülse (6) gestaltet ist.

3. Rückschlagfreier Hammer nach Anspruch 2, **dadurch gekennzeichnet, daß** die Hülse (6) aus Naturkautschuk gebildet ist.

4. Rückschlagfreier Hammer nach Anspruch 2, **dadurch gekennzeichnet, daß** die Hülse (6) aus Neopren gebildet ist.

5. Rückschlagfreier Hammer nach Anspruch 2, **dadurch gekennzeichnet, daß** die Hülse (6) aus Butyl gebildet ist.

6. Rückschlagfreier Hammer nach einem der Ansprüche 1 bis 5, **dadurch gekennzeichnet, daß** die Stielaufnahme (4) als Durchgangsöffnung gestaltet ist.

7. Rückschlagfreier Hammer nach einem der Ansprüche 1 bis 6, **dadurch gekennzeichnet, daß** die Metallhülse (7) als ein Gußteil gebildet ist.

8. Rückschlagfreier Hammer nach einem der Ansprüche 1 bis 7, **dadurch gekennzeichnet, daß** die Innenwandung der Metallhülse (2) konisch geformt ist mit von der Hülsenöffnung (9) zum Hülsengrund (10) nach innen gerichteter Neigung.

9. Rückschlagfreier Hammer nach einem der Ansprüche 2 bis 8, **dadurch gekennzeichnet, daß** die Hülse (6) die Metallhülse (7) über deren gesamte axiale Erstreckung umschließt.

10. Rückschlagfreier Hammer nach einem der Ansprüche 1 bis 9, **dadurch gekennzeichnet, daß** an dem der Stielaufnahme (4) zugewandten Ende des Hammerstiels (3) eine Keilaufnahme (14) für die Aufnahme eines Keils (15) ausgebildet ist.

11. Rückschlagfreier Hammer nach einem der Ansprüche 1 bis 10, **dadurch gekennzeichnet, daß** der Hammerstiel (3) mittels eines die Metallhülse (7) und den Hammerstiel (3) durchsetzenden Stiftes (16) in der Metallhülse gesichert ist.

12. Rückschlagfreier Hammer nach einem der Ansprüche 1 bis 11, **dadurch gekennzeichnet, daß** die Außenumfangsfläche der Metallhülse (7) reliefartige Strukturen (17) aufweist.

13. Rückschlagfreier Hammer nach einem der Ansprüche 1 bis 12, **dadurch gekennzeichnet, daß** die Hülse (6) die in die Stielaufnahme (4) mit den Hammerstiel (3) eingesetzte Metallhülse (7) als ein Spritzgußteil umschließt.

14. Rückschlagfreier Hammer nach einem der Ansprüche 3 bis 13, **dadurch gekennzeichnet, dass** die Hülse (6) und der Hammerkopf (2) mittels eines Gummi-Metallbindemittels ein erstes Gummi-Metall-Verbundelement bilden.

15. Rückschlagfreier Hammer nach einem der Ansprüche 3 bis 14, **dadurch gekennzeichnet, dass** die Hülse (6) und die Metallhülse (7) mittels eines Gummi-Metallbindemittels ein zweites Gummi-Metall-Verbundelement bilden.

## Claims

1. Recoilless hammer with a hammer head (2) having a handle receptacle (4) and with a hammer handle (3) to be inserted in the handle receptacle (4), in which the handle receptacle (4) is lined all around its circumference with a flexible elastic material (5), **characterised in that** a metal sleeve (7) having a solid cap (8) is arranged on the end of the hammer handle facing the handle receptacle, positioned in the flexible elastic material lining and that the handle receptacle, has securing webs (11) on two opposite sides and that the metal sleeve cap has a shoulder (12) and a chamfer (13) formed on its free end.

2. Recoilless hammer according to claim 1, **characterised in that** the flexible elastic material (5) is formed as a sleeve (6).

3. Recoilless hammer according to claim 2, **characterised in that** the sleeve (6) is formed from natural rubber.

4. Recoilless hammer according to claim 2, **characterised in that** the sleeve (6) is formed from Neoprene.

5. Recoilless hammer according to claim 2, **characterised in that** the sleeve (6) is formed from Butyl.

6. Recoilless hammer according to one of the claims 1 to 5, **characterised in that** the handle receptacle (4) is formed as a free opening.

7. Recoilless hammer according to one of the claims 1 to 6, **characterised in that** the metal sleeve (7) is formed as a cast component.

8. Recoilless hammer according to one of the claims 1 to 7, **characterised in that** the inner wall of the metal sleeve (7) is conical in shape, with an inward aligned inclination from the sleeve opening (9) to the base of the sleeve cavity (10).

9. Recoilless hammer according to one of the claims 2 to 8, **characterised in that** the sleeve (6) encloses the metal sleeve (7) over its entire axial length.

10. Recoilless hammer according to one of the claims 1 to 9, **characterised in that** on the end of the hammer handle (3) facing the handle receptacle (4) a wedge receptacle (14) is provided for the acceptance of a wedge (15).

11. Recoilless hammer according to one of the claims 1 to 10, **characterised in that** the hammer handle (3) is secured in the metal sleeve by means of a pin (16) inserted through the metal sleeve (7) and the hammer handle (3).

12. Recoilless hammer according to one of the claims 1 to 11, **characterised in that** the outer circumferential surface of the metal sleeve (7) has relief-type structures (17).

13. Recoilless hammer according to one of the claims 1 to 12, **characterised in that** the sleeve (6) encloses the metal sleeve (7) inserted in the handle receptacle (4) with the hammer handle (3), as an injection moulded component.

14. Recoilless hammer according to one of the claims 3 to 13, **characterised in that** the sleeve (6) and the hammer head (2) form a first rubber-metal composite element by means of a rubber-metal bonding agent.

15. Recoilless hammer according to one of the claims 3 to 14, **characterised in that** the sleeve (6) and the metal sleeve (7) form a second rubber-metal composite element by means of a rubber-metal bonding agent.

## Revendications

1. Marteau sans rebond, comprenant une tête de marteau (2), dotée d'un logement de manche (4), et un manche de marteau (3) à insérer dans le logement de manche (4), ledit logement de manche (4) étant revêtu dans la direction périphérique, sur tous les côtés, d'un matériau (5) souple élastique, **caractérisé par le fait que** l'extrémité du manche de marteau qui est tournée vers le logement de manche porte une douille métallique (7) avec une tête de douille (8) pleine, placée dans le logement de manche, dans le matériau souple élastique, **par le fait que** le logement de manche présente des nervures de fixation (11), situées sur des côtés opposés, et **par le fait que** la tête de douille présente un col de douille (12) et un chanfrein (13) réalisé à son extrémité libre.

2. Marteau sans rebond selon la revendication 1, **caractérisé par le fait que** le matériau (5) souple élastique est conformé en douille (6).

3. Marteau sans rebond selon la revendication 2, **caractérisé par le fait que** la douille (6) est réalisée en caoutchouc naturel.

4. Marteau sans rebond selon la revendication 2, **caractérisé par le fait que** la douille (6) est réalisée en néoprène.

5. Marteau sans rebond selon la revendication 2, **caractérisé par le fait que** la douille (6) est réalisée en butyle.

6. Marteau sans rebond selon une des revendications 1 à 5, **caractérisé par le fait que** le logement de manche (4) est réalisé sous forme de trou débouchant.

7. Marteau sans rebond selon une des revendications 1 à 6, **caractérisé par le fait que** la douille métallique (7) est réalisée comme pièce coulée.

8. Marteau sans rebond selon une des revendications 1 à 7, **caractérisé par le fait que** la paroi intérieure de la douille métallique (7) est conformée en cône, avec une inclinaison vers l'intérieur, depuis l'embouchure de douille (9) en direction du fond de douille (10).

9. Marteau sans rebond selon une des revendications 2 à 8, **caractérisé par le fait que** la douille (6) entoure la douille métallique (7) sur toute la longueur axiale de celle-ci.

10. Marteau sans rebond selon une des revendications 1 à 9, **caractérisé par le fait qu'**une encoche de clavette (14), destinée à recevoir une clavette (15), est réalisée à extrémité du manche de marteau (3) tournée vers le logement de manche (4).

11. Marteau sans rebond selon une des revendications 1 à 10, **caractérisé par le fait que** le manche de marteau (3) est fixé dans la douille métallique au moyen d'une goupille (16) traversant la douille métallique (7) et le manche de marteau (3).

12. Marteau sans rebond selon une des revendications 1 à 11, **caractérisé par le fait que** la surface périphérique extérieure de la douille métallique (7) présente des structures (17) en relief.

13. Marteau sans rebond selon une des revendications 1 à 12, **caractérisé par le fait que** la douille (6) entoure en tant que pièce moulée par injection la douille métallique (7) qui est engagée dans le logement de manche (4) avec le manche de marteau (3).

14. Marteau sans rebond selon une des revendications 3 à 13, **caractérisé par le fait que** la douille (6) et la tête de marteau (2) forment un premier élément composite caoutchouc-métal, grâce à un adhésif caoutchouc-métal.

15. Marteau sans rebond selon une des revendications 3 à 14, **caractérisé par le fait que** la douille (6) et la douille métallique (7) forment un deuxième élément composite caoutchouc-métal, grâce à un adhésif caoutchouc-métal.
